# EUROPÄISCHE PATENTSCHRIFT

(11) **EP 1 287 042 B1**
(45) Veröffentlichungstag und Bekanntmachung des Hinweises auf die Patenterteilung: **29.09.2004**
(21) Anmeldenummer: 01951527.9
(22) Anmeldetag: 29.05.2001
(51) Int. Cl.: C08F 8/50, C08F 210/06, C08F 10/06

(54) **VERFAHREN ZUR HERSTELLUNG VON FÜR DAS FASERSPINNEN GEEIGNETEN PROPYLENPOLYMERISATEN**
PROCESS FOR PRODUCING PROPYLENE POLYMERS THAT ARE SUITED FOR FIBER SPINNING
PROCEDES DE PREPARATION DE POLYMERISATS DE PROPYLENE CONVENANT AU FILAGE DE FIBRES

(30) Priorität: 30.05.2000 DE 10026579
(43) Veröffentlichungstag der Anmeldung: 05.03.2003
(73) Patentinhaber: Basell Polyolefine GmbH, 50389 Wesseling (DE)
(72) Erfinder: ÖZDEMIR, Diana, 64625 Bensheim (DE); SCHUSTER, Michael, 68163 Mannheim (DE); LANGHAUSER, Franz, 67152 Ruppertsberg (DE); SCHWIND, Jürgen, 53332 Bornheim (DE); SUHM, Jürgen, 67551 Worms-Weinsheim (DE); FISCHER, David, 67725 Breunigweiler (DE)
(86) Internationale Anmeldenummer: PCT/EP2001/006108
(87) Internationale Veröffentlichungsnummer: WO 2001/092355

(56) Entgegenhaltungen:
- EP-A- 0 799 839
- EP-A- 0 985 686
- DE-A- 4 321 529
- GB-A- 1 042 178

## Beschreibung

Die vorliegende Erfindung betrifft Verfahren zur Herstellung von für das Faserspinnen geeigneten Propylenpolymerisaten aus Propylen, Ethylen und/oder C₄-C₁₈-Alk-1-enen, wobei mindestens 90 mol-% der in den Propylenpolymerisaten enthaltenen Monomereinheiten durch Polymerisation von Propylen entstanden sind, bei dem die entsprechenden Monomere mittels eines Metallocenkatalysatorsystems zu Propylenpolymerisaten mit einem Verhältnis Q = M_{W}/M_{N} von kleiner oder gleich 2,2 polymerisiert werden. Weiterhin betrifft die vorliegende Erfindung Propylenpolymerisate, erhältlich durch diese Verfahren, ein Verfahren, verschiedene solcher Propylenpolymerisate, die sich in ihrer Schmelze-Fließrate unterscheiden, herzustellen, die Verwendung der Propylenpolymerisate zur Herstellung von Fasern sowie Folien, Fasern und Formkörper aus den Propylenpolymerisaten.

Ein wesentliches Anwendungsgebiet für Propylenpolymerisate ist die Herstellung von Fasern, Filamenten oder Vliesen, wobei die letzteren oft auch als nonwoven fabrics bezeichnet werden. Gemeinsam ist diesen Anwendungen, daß die eingesetzten Propylenpolymerisate jeweils zunächst, beispielsweise in einem Extruder, aufgeschmolzen und dann über eine Düse versponnen werden.

Generell ist für das Verspinnen von Propylenpolymerisaten bekannt, daß die Verspinnbarkeit, die Struktur und die Eigenschaften der Fasern von der Breite der Molmassenverteilung der eingesetzten Propylenpolymerisate abhängt. F. Kloos, Kunststoffe 77, 1987, 1168 - 1172 sowie S. Misra, F.-M. Lu, J.E. Spruiell und G.C. Richeson, J. Appl. Polym. Sci. 56, 1995, 1761 - 1779 beobachteten, daß sich mit zunehmender Verengung der Molmassenverteilung die Verspinnbarkeit verbessert und die Festigkeit der Fasern erhöht. Einen weiteren Einflußfaktor stellt die mittlere Molmasse bzw. die Fließfähigkeit der Polymerisate dar.

Ein üblicher Weg, ausgehend von Propylenpolymerisaten mit breiter Molmassenverteilungen zu solchen mit einer verengten Molmassenverteilung zu gelangen, besteht darin, einen thermischen oder peroxidischen Abbau der Polymerisate durchzuführen, wobei auch die mittlere Molmasse verringert wird.

Enge Molmassenverteilungen werden auch erhalten, wenn man die Propylenpolymerisate durch Polymerisation mittels eines Metallocenkatalysators durchführt. Dementsprechend werden beispielsweise in EP-A 600 461 und WO 94/28219 für das Faserspinnen geeignete Propylenpolymerisate beschrieben, die mittels Metallocenkatalysatoren erhalten wurden. Diese Polymerisate besitzen nicht nur den Vorteil, daß sie eine gute Verspinnbarkeit aufweisen und sich zu Fasern mit einer hohen Festigkeit verarbeiten lassen. Darüber hinaus werden mit ihnen auch Fasern mit geringerer Fadenstärke zugänglich und ihre ataktischen Anteile sowie die aus den Katalysatoren stammenden Rückstände, insbesondere an korrosiven Halogenen, sind geringer.

Die EP-A 985 686 beschreibt Propylenpolymerisatformmassen, die durch Reaktion eines kristallinen Propylenpolymerisats und eines Peroxids erhalten werden. Die Breite der Molmassenverteilung wird durch die Reaktion auf von 75 % bis 95 % des Wertes des Ausgangsprodukts reduziert. Die zur Herstellung dieser Propylenpolymerisatformmassen eingesetzten kristallinen Propylenpolymerisate weisen einen Q-Wert größer als 2,8 auf.

Obwohl die Festigkeit der Fasern, die aus diesen mit Metallocenkatalysatoren erhaltenen Propylenpolymerisaten hergestellt wurden, deutlich höher ist als bei der Verwendung von herkömmlichen Polypropylenen, bestand weiterhin der Bedarf nach Propylenpolymerisaten, aus denen sich Fasern mit nochmals erhöhter Festigkeit spinnen lassen.

Der vorliegenden Erfindung lag daher die Aufgabe zugrunde, den geschilderten Nachteilen abzuhelfen und Propylenpolymerisate bereitzustellen, die eine gute Verspinnbarkeit besitzen und geringe ataktische Anteile sowie geringe Rückstände insbesondere an Halogenen aufweisen, und die sich zu Fasern mit weiter erhöhter Festigkeit verspinnen lassen.

Überraschenderweise wurde nun gefunden, daß sich bei gleicher Schmelze-Fließfähigkeit (Melt Flow Rate; MFR) der Polymerisate die Festigkeit der Fasern weiter steigern läßt, wenn die mit Metallocenkatalysatoren erhaltenen Propylenpolymerisate einem peroxidischen oder thermischen Abbauschritt unterworfen wurden, obwohl hierbei die Breite der Molmassenverteilung nicht weiter verändert wird. Des weiteren wird eine Verbesserung der Wirtschaftlichkeit erzielt, da unterschiedliche Produkte mit verschiedenen Schmelze-Fließraten ausgehend vom gleichen Produkt der Polymerisationsreaktion hergestellt werden können.

Demgemäß wurde Verfahren zur Herstellung von für das Faserspinnen geeigneten Propylenpolymerisaten aus Propylen, Ethylen und/oder C₄-C₁₈-Alk-1-enen, wobei mindestens 90 mol-% der in den Propylenpolymerisaten enthaltenen Monomereinheiten durch Polymerisation von Propylen entstanden sind, bei dem die entsprechenden Monomere mittels eines Metallocenkatalysatorsystems zu Propylenpolymerisaten mit einem Verhältnis Q = M_{W}/M_{N} von kleiner oder gleich 2,2 polymerisiert werden, und Q ein Maß für die Breite der Molmassenverteilung ist, M_{W} das Massenmittel der Molmasse und M_{N} das Zahlenmittel der Molmasse bedeutet und M_{W} und M_{N} durch Gelpermeationschromatographie (GPC) bei 145°C in 1,2,4-Trichlorbenzol bestimmt werden, gefunden, die dadurch gekennzeichnet sind, daß man die Propylenpolymerisate anschließend peroxidisch oder thermisch abbaut. Weiterhin wurden auch durch dieses Verfahren erhältliche Propylenpolymerisate, ein Verfahren, verschiedene solcher Propylenpolymerisate, die sich in ihrer Schmelze-Fließrate unterscheiden, herzustellen, die Verwendung der Propylenpolymerisate zur Herstellung von Fasern sowie Folien, Fasern und Formkörper aus den Propylenpolymerisaten gefunden.

Bei dem erfindungsgemäßen Verfahren werden die für das Faserspinnen geeigneten Propylenpolymerisate durch Polymerisation von Propylen, Ethylen und/oder C₄-C₁₈-Alk-1-enen hergestellt. Unter der Bezeichnung C₄-C₁₈-Alk-1-ene sollen lineare oder verzweigte Alk-1-ene verstanden werden, die von vier bis achtzehn Kohlenstoffatome aufweisen. Bevorzugt sind lineare Alk-1-ene. Insbesondere sind Ethylen, But-1-en, Pent-1-en, Hex-1-en, Hept-1-en oder Oct-1-en oder Gemische aus diesen Comonomeren zu nennen, wobei bevorzugt Ethylen oder But-1-en verwendet wird. Die Propylenpolymerisate enthalten mindestens 90 mol-% an Monomereinheiten, die durch Polymerisation von Propylen entstanden sind. Bevorzugt ist der Gehalt an von Propylen abgeleiteten Monomereinheiten mindestens 95 mol-% und insbesondere mindestens 98 mol-%. Besonders bevorzugt wird bei dem erfindungsgemäßen Verfahren ausschließlich Propylen als Monomer eingesetzt, d.h. die die für das Faserspinnen geeigneten Propylenpolymerisate sind Propylenhomopolymerisate.

Unter Metallocenkatalysatoren sollen alle Katalysatorsysteme verstanden werden, die mindestens eine Metallocenverbindung enthalten. Metallocene sind hierbei alle Komplexverbindungen aus Metallen von Nebengruppen des Periodensystems mit organischen Liganden, die zusammen mit metalloceniumionenbildenden Verbindungen wirksame Katalysatorsysteme ergeben.

Erfindungsgemäß geeignete Metallocenkatalysatorsysteme enthalten als aktive Bestandteile in der Regel
A) mindestens einen Metallocenkomplex der allgemeinen Formel (I) 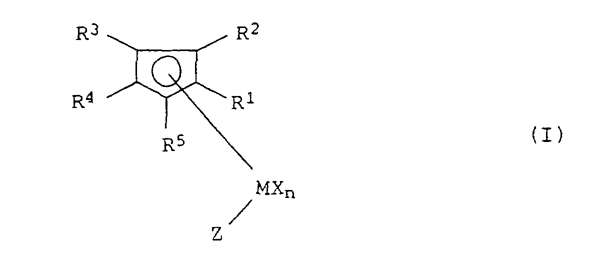 in der die Substituenten und Indizes folgende Bedeutung haben:
   - M: Titan, Zirkonium, Hafnium, Vanadium, Niob oder Tantal, sowie Elemente der III. Nebengruppe des Periodensystems und der Lanthanoiden,
   - X: Fluor, Chlor, Brom, Iod, Wasserstoff, C₁-C₁₀-Alkyl, C₆-C₁₅-Aryl, Alkylaryl mit 1 bis 10 C-Atomen im Alkylrest und 6 bis 20 C-Atomen im Arylrest, -OR⁶ oder -NR⁶R⁷,
   - n: 1, 2 oder 3, wobei n der Wertigkeit von M minus der Zahl 2 entspricht,
wobei
- R⁶ und R⁷: C₁-C₁₀-Alkyl, C₆-C₁₅-Aryl, Alkylaryl, Arylalkyl, Fluoralkyl oder Fluoraryl mit jeweils 1 bis 10 C-Atomen im Alkylrest und 6 bis 20 C-Atomen im Arylrest bedeuten und
die Reste X gleich oder verschieden si
- R¹ bis R⁵: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Aryl-alkyl, wobei auch zwei benachbarte Reste gemeinsam für 4 bis 15 C-Atome aufweisende gesättigte oder ungesättigte cyclische Gruppen stehen können, oder Si(R⁸)₃ mit
- R⁸: C₁-C₁₀-Alkyl, C₃-C₁₀-Cycloalkyl oder C₆-C₁₅-Aryl sein kann und
- Z: für X oder 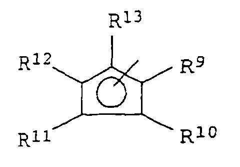 steht,
wobei die Reste
- R⁹ bis R¹³: Wasserstoff, C₁-C₁₀-Alkyl, 5- bis 7-gliedriges Cycloalkyl, das seinerseits durch C₁-C₁₀-Alkyl substituiert sein kann, C₆-C₁₅-Aryl oder Arylalkyl bedeuten und wobei auch zwei benachbarte Reste gemeinsam für 4 bis 15 C-Atome aufweisende gesättigte oder ungesättigte cyclische Gruppen stehen können, oder Si(R¹⁴)₃ mit
- R¹⁴: C₁-C₁₀-Alkyl, C₃-C₁₀-Cycloalkyl oder C₆-C₁₅-Aryl bedeuten,
oder wobei die Reste R⁴ und Z gemeinsam eine Gruppierung -R¹⁵-A-bilden, in der
- R¹⁵: 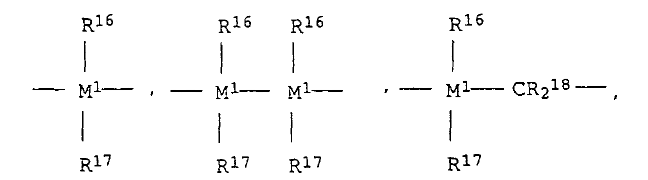 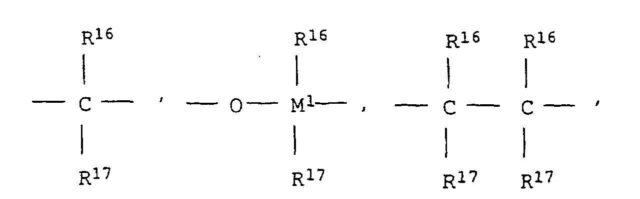 = BR¹⁶, = AlR¹⁶, -Ge-, -Sn-, -O-, -S-, = SO, = SO₂, = NR¹⁶, = CO, = PR¹⁶ oder = P(O)R¹⁶ ist,
wobei
- R¹⁶, R¹⁷ und R¹⁸: gleich oder verschieden sind und jeweils ein Wasserstoffatom, ein Halogenatom, eine C₁-C₁₀-Alkylgruppe, eine C₁-C₁₀-Fluoralkylgruppe, eine C₆-C₁₀-Fluorarylgruppe, eine C₆-C₁₀-Arylgruppe, eine C₁-C₁₀-Alkoxygruppe, eine C₂-C₁₀-Alkenylgruppe, eine C₇-C₄₀-Arylalkylgruppe, eine C₈-C₄₀-Arylalkenylgruppe oder eine C₇-C₄₀-Alkylarylgruppe bedeuten oder wobei zwei benachbarte Reste jeweils mit den sie verbindenden Atomen einen 4 bis 15 C-Atome aufweisenden gesättigten oder ungesättigten Ring bilden, und
M¹ Silicium, Germanium oder Zinn ist,
- A: ―O―, ―S―, 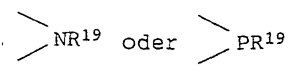 bedeuten, mit
- R¹⁹: C₁-C₁₀-Alkyl, C₆-C₁₅-Aryl, C₃-C₁₀-Cycloalkyl, C₇-C₁₈-Alkylaryl oder Si(R²⁰)₃,
- R²⁰: Wasserstoff, C₁-C₁₀-Alkyl, C₆-C₁₅-Aryl, das seinerseits mit C₁-C₄-Alkylgruppen substituiert sein kann oder C₃-C₁₀-Cycloalkyl
oder wobei die Reste R⁴ und R¹² gemeinsam eine Gruppierung -R¹⁵-bilden.

Bevorzugt sind die Reste X in der allgemeinen Formel (I) gleich.

Von den Metallocenkomplexen der allgemeinen Formel (I) sind 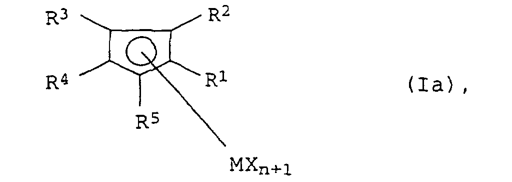 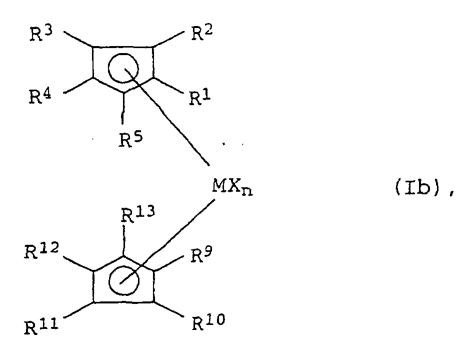 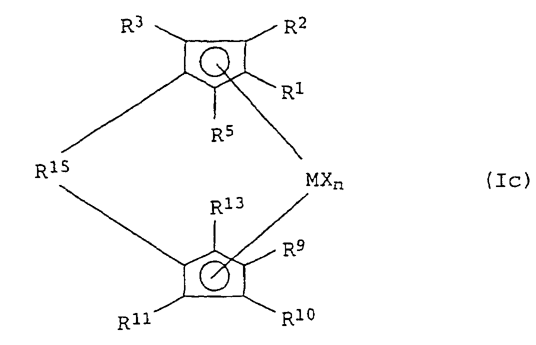 und 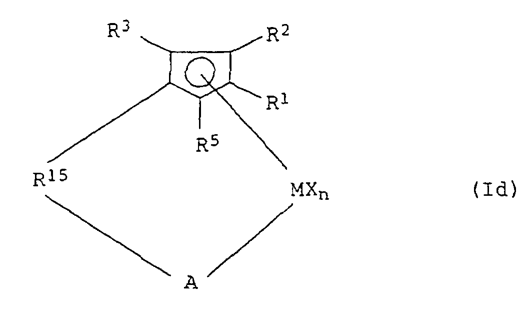 bevorzugt.

Von den Verbindungen der Formel (Ia) sind insbesondere diejenigen bevorzugt, in denen
- M: Titan, Zirkonium oder Hafnium,
- X: Chlor, C₁-C₄-Alkyl oder Phenyl,
- n: die Zahl 2 und
- R¹ bis R⁵: Wasserstoff oder C₁-C₄-Alkyl bedeuten.

Von den Verbindungen der Formel (Ib) sind als bevorzugt diejenigen zu nennen, bei denen
- M: für Titan, Zirkonium oder Hafnium steht,
- X: Chlor, C₁-C₄-Alkyl oder Phenyl,
- n: die Zahl 2,
- R¹ bis R⁵: Wasserstoff, C₁-C₄-Alkyl oder Si(R⁸)₃ und
- R⁹ bis R¹³: Wasserstoff, C₁-C₄-Alkyl oder Si(R¹⁴)₃ bedeuten.

Insbesondere sind die Verbindungen der Formel (Ib) geeignet, in denen die Cyclopentadienylreste gleich sind.

Beispiele für besonders geeignete Verbindungen sind u.a.:
Bis(cyclopentadienyl)zirkoniumdichlorid,
Bis(pentamethylcyclopentadienyl)zirkoniumdichlorid,
Bis(methylcyclopentadienyl)zirkoniumdichlorid,
Bis(ethylcyclopentadienyl)zirkoniumdichlorid,
Bis(n-butylcyclopentadienyl)zirkoniumdichlorid und
Bis(trimethylsilylcyclopentadienyl)zirkoniumdichlorid
sowie die entsprechenden Dimethylzirkoniumverbindungen.

Von den Verbindungen der Formel (Ic) sind diejenigen besonders geeignet, in denen
- R¹ und R⁹: gleich sind und für Wasserstoff oder C₁-C₁₀-Alkylgruppen stehen,
- R⁵ und R¹³: gleich sind und für Wasserstoff, eine Methyl-, Ethyl-, iso-Propyl- oder tert.-Butylgruppe stehen,
- R³ und R¹¹: C₁-C₄-Alkyl und
- R² und R¹⁰: Wasserstoff bedeuten
oder
zwei benachbarte Reste R² und R³ sowie R¹⁰ und R¹¹ gemeinsam für 4 bis 12 C-Atome aufweisende gesättigte oder ungesättigte cyclische Gruppen stehen,
- R¹⁵: 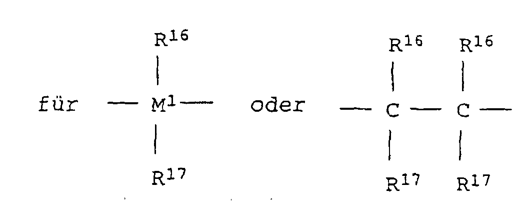 steht,
- M: für Titan, Zirkonium oder Hafnium und
- X: für Chlor, C₁-C₄-Alkyl oder Phenyl stehen.

Beispiele für besonders geeignete Komplex-verbindungen (Ic) sind u.a.
Dimethylsilandiylbis(cyclopentadienyl)zirkoniumdichlorid,
Dimethylsilandiylbis(indenyl)zirkoniumdichlorid,
Dimethylsilandiylbis(tetrahydroindenyl)zirkoniumdichlorid,
Ethylenbis(cyclopentadienyl)zirkoniumdichlorid,
Ethylenbis(indenyl)zirkoniumdichlorid,
Ethylenbis(tetrahydroindenyl)zirkoniumdichlorid,
Tetramethylethylen-9-fluorenylcyclopentadienylzirkoniumdichlorid,
Dimethylsilandiylbis(3-tert.butyl-5-methylcyclopentadienyl)-zirkoniumdichlorid,
Dimethylsilandiylbis(3-tert.butyl-5-ethylcyclopentadienyl)-zirkoniumdichlorid,
Dimethylsilandiylbis(2-methylindenyl)zirkoniumdichlorid,
Dimethylsilandiylbis(2-isopropylindenyl)zirkoniumdichlorid,
Dimethylsilandiylbis(2-tert.butylindenyl)zirkoniumdichlorid,
Diethylsilandiylbis(2-methylindenyl)zirkoniumdibromid,
Dimethylsilandiylbis(3-methyl-5-methylcyclopentadienyl)-zirkoniumdichlorid,
Dimethylsilandiylbis(3-ethyl-5-isopropylcyclopentadienyl)-zirkoniumdichlorid,
Dimethylsilandiylbis(2-ethylindenyl)zirkoniumdichlorid,
Dimethylsilandiylbis(2-methyl-4,5-benzindenyl)zirkoniumdichlorid
Dimethylsilandiylbis(2-ethyl-4,5-benzindenyl)zirkoniumdichlorid
Methylphenylsilandiylbis(2-methyl-4,5-benzindenyl)-zirkoniumdichlorid,
Methylphenylsilandiylbis(2-ethyl-4,5-benzindenyl)-zirkoniumdichlorid,
Diphenylsilandiylbis(2-methyl-4,5-benzindenyl)zirkoniumdichlorid,
Diphenylsilandiylbis(2-ethyl-4,5-benzindenyl)zirkoniumdichlorid
und Diphenylsilandiylbis(2-methylindenyl)hafniumdichlorid
sowie die entsprechenden Dimethylzirkoniumverbindungen.

Weitere Beispiele für geeignete Komplexverbindungen sind u.a.
Dimethylsilandiylbis(2-methyl-4-phenylindenyl)zirkoniumdichlorid,
Dimethylsilandiylbis(2-methyl-4-naphthylindenyl)zirkoniumdichlorid,
Dimethylsilandiylbis(2-methyl-4-isopropylindenyl)zirkoniumdichlorid,
Dimethylsilandiylbis(2-methyl-4,6-diisopropylindenyl)zirkoniumdichlorid,
Dimethylsilandiylbis(2-methyl-4[4'-tert.butylphenyl]indenyl)zirkoniumdichlorid,
Dimethylsilandiylbis(2-ethyl-4[4'-tert.butylphenyl]indenyl)zirkoniumdichlorid,
Dimethylsilandiylbis(2-propyl-4[4'-tert.butylphenyl]indenyl)-zirkoniumdichlorid und
Dimethylsilandiyl(2-isopropyl-4[4'-tert.butylphenyl]indenyl)-(2-methyl-4[4'-tert.butylphenyl]indenyl)zirkoniumdichlorid
sowie die entsprechenden Dimethylzirkoniumverbindungen.

Bei den Verbindungen der allgemeinen Formel (Id) sind als besonders geeignet diejenigen zu nennen, in denen
- M: für Titan oder Zirkonium,
- X: für Chlor, C₁-C₄-Alkyl oder Phenyl stehen.
- R¹⁵: 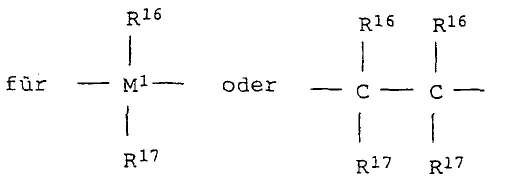 steht,
- A: für ― O ― , ― S ― , 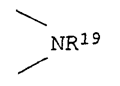
und
- R¹ bis R³ und R⁵: für Wasserstoff, C₁-C₁₀-Alkyl, C₃-C₁₀-Cycloalkyl, C₆-C₁₅-Aryl oder Si(R⁸)₃ stehen, oder wobei zwei benachbarte Reste für 4 bis 12 C-Atome aufweisende cyclische Gruppen stehen.

Die Synthese derartiger Komplexverbindungen kann nach an sich bekannten Methoden erfolgen, wobei die Umsetzung der entsprechend substituierten, cyclischen Kohlenwasserstoffanionen mit Halogeniden von Titan, Zirkonium, Hafnium, vanadium, Niob oder Tantal, bevorzugt ist.

Beispiele für entsprechende Herstellungsverfahren sind u.a. im Journal of Organometallic Chemistry, 369 (1989), 359-370 beschrieben.

Als Komponente A) können auch Mischungen verschiedener Metallocenkomplexe eingesetzt werden.

Weiterhin enthalten die Metallocenkatalysatorsysteme als Komponente B) mindestens eine metalloceniumionenbildende Verbindung.

Geeignete metalloceniumionenbildende Verbindungen B) sind beispielsweise starke, neutrale Lewissäuren, ionische Verbindungen mit lewissauren Kationen oder ionische Verbindungen mit Brönsted-Säuren als Kationen.

Als starke, neutrale Lewissäuren sind Verbindungen der allgemeinen Formel (II)

M²X¹X²X³ (II)

bevorzugt, in der
- M²: ein Element der III. Hauptgruppe des Periodensystems bedeutet, insbesondere B, Al oder Ga, vorzugsweise B,
- X¹, X² und X³: für Wasserstoff, C₁-C₁₀-Alkyl, C₆-C₁₅-Aryl, Alkylaryl, Arylalkyl, Halogenalkyl oder Halogenaryl mit jeweils 1 bis 10 C-Atomen im Alkylrest und 6 bis 20 C-Atome im Arylrest oder Fluor, Chlor, Brom oder Jod stehen, insbesondere für Halogenaryle, vorzugsweise für Pentafluorphenyl.

Besonders bevorzugt sind Verbindungen der allgemeinen Formel (II), in der X¹, X² und X³ gleich sind, vorzugsweise Tris(pentafluorphenyl)boran.

Als ionische Verbindungen mit lewissauren Kationen sind Verbindungen der allgemeinen Formel (III)

[(Y^{a+})Q₁Q₂ ... Q_{z}]^{d+} (III)

geeignet, in denen
- Y: ein Element der I. bis VI. Hauptgruppe oder der I. bis VIII. Nebengruppe des Periodensystems bedeutet,
- Q₁ bis Q_{z}: für einfach negativ geladene Reste wie C₁-C₂₈-Alkyl, C₆-C₁₅-Aryl, Alkylaryl, Arylalkyl, Halogenalkyl, Halogenaryl mit jeweils 6 bis 20 C-Atomen im Aryl- und 1 bis 28 C-Atome im Alkylrest, C₃-C₁₀-Cycloalkyl, welches gegebenenfalls mit C₁-C₁₀-Alkylgruppen substituiert sein kann, Halogen, C₁-C₂₈-Alkoxy, C₆-C₁₅-Aryloxy, Silyl- oder Mercaptylgruppen
- a: für ganze Zahlen von 1 bis 6 und
- z: für ganze Zahlen von 0 bis 5 steht,
- d: der Differenz a-z entspricht, wobei d jedoch größer oder gleich 1 ist.

Besonders geeignet sind Carboniumkationen, Oxoniumkationen und Sulfoniumkationen sowie kationische Übergangsmetallkomplexe. Insbesondere sind das Triphenylmethylkation, das Silberkation und das 1,1'-Dimethylferrocenylkation zu nennen. Bevorzugt besitzen sie nicht koordinierende Gegenionen, insbesondere Borverbindungen, wie sie auch in der WO 91/09882 genannt werden, bevorzugt Tetrakis(pentafluorophenyl)borat.

Ionische Verbindungen mit Brönsted-Säuren als Kationen und vorzugsweise ebenfalls nicht koordinierende Gegenionen sind in der WO 91/09882 genannt, bevorzugtes Kation ist das N,N-Dimethylanilinium.

Die Menge an starken, neutralen Lewissäuren, ionischen Verbindungen mit lewissauren Kationen oder ionischen Verbindungen mit Brönsted-Säuren als Kationen beträgt bevorzugt 0,1 bis 10 Äquivalente, bezogen auf den Metallocenkomplex A) .

Besonders geeignet als metalloceniumionenbildende Verbindung B) sind offenkettige oder cyclische Alumoxanverbindungen der allgemeinen Formeln (IV) oder (V) 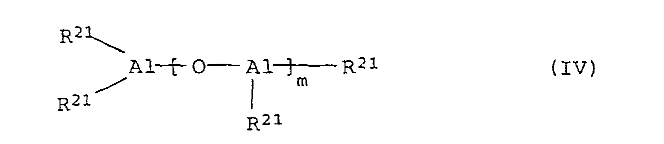 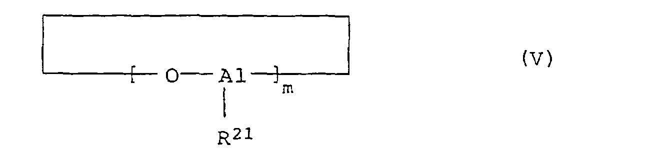
- wobei R²¹: eine C₁-C₄-Alkylgruppe bedeutet, bevorzugt eine Methyl- oder Ethylgruppe und m für eine ganze Zahl von 5 bis 30, bevorzugt 10 bis 25 steht.

Die Herstellung dieser oligomeren Alumoxanverbindungen erfolgt üblicherweise durch Umsetzung einer Lösung von Trialkylaluminium mit Wasser und ist u.a. in der EP-A 284 708 und der US-A 4 794 096 beschrieben.

In der Regel liegen die dabei erhaltenen oligomeren Alumoxanverbindungen als Gemische unterschiedlich langer, sowohl linearer als auch cyclischer Kettenmoleküle vor, so daß m als Mittelwert anzusehen ist. Die Alumoxanverbindungen können auch im Gemisch mit anderen Metallalkylen, bevorzugt mit Aluminiumalkylen vorliegen.

Es hat sich als vorteilhaft erwiesen, die Metallocenkomplexe A) und die oligomeren Alumoxanverbindungen der allgemeinen Formeln (IV) oder (V) in solchen Mengen zu verwenden, daß das atomare Verhältnis zwischen Aluminium aus den oligomeren Alumoxanverbindungen und dem Übergangsmetall aus den Metallocenkomplexen im Bereich von 10:1 bis 10⁶:1, insbesondere im Bereich von 10:1 bis 10⁴:1, liegt.

Weiterhin können als Komponente B) anstelle der Alumoxanverbindungen der allgemeinen Formeln (IV) oder (V) Aryloxyalumoxane, wie in der US-A 5 391 793 beschrieben, Aminoaluminoxane, wie in der US-A 5 371 260 beschrieben, Aminoaluminoxanhydrochloride, wie in der EP-A 633 264 beschrieben, Siloxyaluminoxane, wie in der EP-A 621 279 beschrieben, oder Mischungen daraus eingesetzt werden.

Geeignete metalloceniumionenbildende Verbindungen B) sind auch die in der WO 99/06414 offenbarten Bor-Aluminium-Verbindungen wie beispielsweise Di-[bis(pentafluorphenylboroxy)]methylalan. Die Bor-Aluminium-Verbindungen können auch abgeschiedenen auf einen organischen oder anorganischen Träger eingesetzt werden.

Vorzugsweise werden sowohl die Metallocenkomplexe A) als auch die metalloceniumionenbildende Verbindungen B) in Lösung eingesetzt, wobei aromatische Kohlenwasserstoffe mit 6 bis 20 C-Atomen, insbesondere Xylole und Toluol, besonders bevorzugt sind.

Geeignete Metallocenkatalysatorsysteme können als weitere Komponente C) zusätzlich noch eine Metallverbindung der allgemeinen Formel (VI)

M³ (R²²)ᵣ (R²³)ₛ (R²⁴)ₜ (VI)

in der
- M³: ein Alkali-, ein Erdalkalimetall oder ein Metall der III. Hauptgruppe des Periodensystems, d.h. Bor, Aluminium, Gallium, Indium oder Thallium bedeutet,
- R²²: Wasserstoff, C₁-C₁₀-Alkyl, C₆-C₁₅-Aryl, Alkylaryl oder Arylalkyl mit jeweils 1 bis 10 C-Atom im Alkylrest und 6 bis 20 C-Atomen im Arylrest,
- R²³ und R²⁴: Wasserstoff, Halogen, C₁-C₁₀-Alkyl, C₆-C₁₅-Aryl, Alkylaryl, Arylalkyl oder Alkoxy mit jeweils 1 bis 10 C-Atomen im Alkylrest und 6 bis 20 C-Atomen im Arylrest,
- r: eine ganze Zahl von 1 bis 3
und
- s und t: ganze Zahlen von 0 bis 2 bedeuten, wobei die Summe r+s+t der Wertigkeit von M³ entspricht,
enthalten.

Von den Metallverbindungen der allgemeinen Formel (VI) sind diejenigen bevorzugt, in denen
- M³: Lithium, Magnesium oder Aluminium bedeutet und
- R²³ und R²⁴: für C₁-C₁₀-Alkyl stehen.

Besonders bevorzugte Metallverbindungen der Formel (VI) sind n-Butyl-Lithium, n-Butyl-n-octyl-Magnesium, n-Butyl-n-heptyl-Magnesium, Tri-n-hexyl-aluminium, Tri-iso-butyl-aluminium, Triethylaluminium und Trimethylaluminium.

Wenn eine Metallverbindung C) eingesetzt wird, ist sie bevorzugt in einer solchen Menge im Katalysatorsystem enthalten, daß das molare Verhältnis von M³ aus Formel (VI) zu Übergangsmetall M aus Formel (I) von 800:1 bis 1:1, insbesondere 500:1 bis 50:1, beträgt.

Die Metallocenkomplexe A) können auch auf einem Trägermaterial eingesetzt werden.

Als Trägermaterialien werden vorzugsweise feinteilige Träger eingesetzt, die im allgemeinen einen Teilchendurchmesser im Bereich von 1 bis 300 µm aufweisen, insbesondere von 20 bis 90 µm. Geeignete Trägermaterialien sind beispielsweise anorganische Oxide des Siliciums, des Aluminiums, des Titans oder eines der Metalle der I. oder II. Hauptgruppe des Periodensystems oder Mischungen dieser Oxide, von denen außer Aluminiumoxid oder Magnesiumoxid oder einem Schichtsilikat insbesondere Kieselgel bevorzugt ist.

Der Träger kann einer thermischen Behandlung z.B. zur Entfernung von adsorbiertem Wasser unterzogen werden, wobei eine solche Behandlung in der Regel bei Temperaturen im Bereich von 80 bis 200°C, vorzugsweise von 100 bis 150°C, durchgeführt wird, oder er kann calciniert werden. Der Träger kann auch chemisch behandelt werden, wobei in der Regel übliche Trocknungsmittel wie Metallalkyle, bevorzugt Aluminiumalkyle, Chlorsilane oder SiCl₄ zum Einsatz kommen.

Geeignete Träger sind auch feinteilige Polyolefine, beispielsweise feinteiliges Polypropylen.

Die Metallocenkatalysatorsysteme können auch mit Ziegler-Katalysatoren in Gegenwart oder in Abwesenheit eines zu polymerisierenden Monomeren gemischt und in der Olefinpolymerisation verwendet werden.

Die Katalysatoren können auch, beispielsweise in Suspension oder in bulk-Fahrweise, vorpolymerisiert oder voraktiviert sein.

Die Polymerisation kann in bekannter weise in Masse, in Suspension oder in der Gasphase in den üblichen, für die Polymerisation von Propylen verwendeten Reaktoren entweder absatzweise oder bevorzugt kontinuierlich, ein- oder mehrstufig erfolgen. In der Regel wird die Polymerisationen bei Temperaturen im Bereich von 20 bis 150°C und Drücken im Bereich von 1 bis 100 bar mit mittleren verweilzeiten von 0,5 bis 5 Stunden durchgeführt. Bevorzugt sind dabei Temperaturen von 60 bis 90°C, Drücke von 20 bis 35 bar und mittlere verweilzeiten von 0,5 bis 3 Stunden.

Die bei der Polymerisation des erfindungsgemäßen Verfahrens erhaltenen Polymerisate weisen eine Breite der Molmassenverteilung Q = M_{W}/M_{N} von kleiner oder gleich 2,2 und bevorzugt von kleiner oder gleich 2,0 auf, wobei die Molmassenverteilung durch Gelpermeationschromatographie (GPC) in 1,2,4-Trichlorbenzol bei 145°C bestimmt wird und die Kalibrierung der GPC mittels Polypropylenstandards mit Molmassen von 100 bis 10⁷ g/mol erfolgt.

Der peroxidische oder thermische Abbau der Propylenpolymerisate erfolgt in der Regel in Extrudern oder Mixern, wobei üblicherweise das Polymerisat in der Form eingesetzt wird, in der es bei der Polymerisation anfällt. Es können alle ein- oder zweistufigen Maschinen verwendet werden, die feste oder flüssige Formmassen aufnehmen und aus einer Öffnung vorwiegend kontinuierlich auspressen. Beispiele für Extruder sind Scheibenextruder, Stiftextruder und Planetwalzenextruder. Weitere Möglichkeiten sind Kombinationen von Mixern mit Austragsschnecken bzw. Zahnradpumpen. Bevorzugte Extruder sind Schneckenextruder, wobei diese als Einwellen- oder Zweiwellenmaschinen ausgeführt sein können. Besonders bevorzugt sind Zweischneckenextruder und kontinuierlich arbeitende Mixer mit Austragsorganen. Solche Maschinen sind in der Kunststoffindustrie üblich und werden beispielsweise von den Fa. Werner & Pfleiderer, Berstorff, Leistritz, JSW, Farrel, Kobe oder Toshiba hergestellt.

Erfolgt der Abbau der Propylenpolymerisate peroxidisch, werden die Propylenpolymerisate mit einem Peroxid in Kontakt gebracht. Übliche Peroxide sind Dicumylperoxid, Bis-(tert.-butylperoxyisopropyl)benzol, 2,5-Dimethyl- 2,5-di-tert.-butylperoxyhexan und Di-tert.-butylperoxid. Bevorzugt wird als Peroxid 2,5-Dimethyl-2,5-di-tert.-butylperoxyhexan eingesetzt. Die Menge des eingesetzten Peroxids beträgt in der Regel von 0,1 bis 2 kg pro Tonne Polypropylen.

Die Umsetzung von Propylenpolymerisate mit dem Peroxid erfolgt in der Regel bei Extrudertemperaturen im Bereich von 180 bis 280°C, bevorzugt 190 bis 260°C. Dabei herrschen im Extruder üblicherweise Drücke von 0 bis 200 bar, bevorzugt von 0,5 bis 150 bar.

Werden die Propylenpolymerisate thermisch abgebaut, wird kein Peroxid zudosiert. Allerdings erfolgt dann die Extrusion üblicherweise bei Extrudertemperaturen im Bereich von 190 bis 300°C, bevorzugt 210 bis 280°C.

Durch den Abbau wird die Fließfähigkeit der der Schmelze der erfindungsgemäß eingesetzten Propylenpolymerisate erhöht, ohne daß die Breite der Molmassenverteilung wesentlich beeinflußt wird.

Die im erfindungsgemäßen Verfahren erhaltenen, für das Faserspinnen geeigneten Propylenpolymerisate weisen nach dem Abbau eine Fließfähigkeit, bestimmt als Schmelze-Fließrate MFR nach ISO-Norm 1133 bei 230°C und unter einem Gewicht von 2,16 kg, im Bereich von 4 bis 3000 g/10 min und insbesondere von 8 bis 40 g/10 min auf. Die Schmelztemperaturen der für das Faserspinnen geeigneten Propylenpolymerisate, bestimmt durch DSC nach ISO 3146, liegen in der Regel im Bereich von 120 bis 165°C und bevorzugt im Bereich von 145 bis 155°C.

In der Regel werden den für das Faserspinnen geeigneten Propylenpolymerisat übliche Additive wie Stabilisatoren, Gleit- und Entformungsmittel, Füllstoffe, Nukleierungsmittel, Antistatika, Weichmacher, Farbstoffe, Pigmente oder Flammschutzmittel in üblichen Mengen zugesetzt. In der Regel werden diese gleich bei dem den Abbau bewirkenden Extrusionsschritt zugesetzt.

Übliche Stabilisatoren sind Antioxidantien wie sterisch gehinderte Phenole, Verarbeitungsstabilisatoren wie Phosphite oder Phosphonite, Säurefänger wie Calcium- oder Zinkstearat oder Dihydrotalcit, sterisch gehinderte Amine oder auch UV-Stabilisatoren. Im allgemeinen enthält die erfindungsgemäße Propylenpolymerisat-Zusammensetzung einen oder mehrere der Stabilisatoren in Mengen bis zu 2 Gew.-%.

Geeignete Gleit- und Entformungsmittel sind beispielsweise Fettsäuren, Calcium- oder Zinksalze der Fettsäuren, Fettsäureamide oder niedermolekulare Polyolefinwachse, die üblicherweise in Konzentrationen bis 2 Gew-% eingesetzt werden.

Als Füllstoffe für die Propylenpolymerisat-Zusammensetzung kommen z.B. Talkum, Kreide oder Glasfasern in Betracht, wobei hier Mengen bis 50 Gew.-% verwendet werden können.

Geeignete Nukleierungsmittel sind beispielsweise anorganische Zusatzstoffe wie Talkum, Kieselsäure oder Kaolin, Salze von Monooder Polycarbonsäuren wie Natriumbenzoat oder Aluminium-tert.-butylbenzoat, Dibenzylidensorbitol oder dessen C₁-C₈-alkylsubstituierte Derivate wie Methyl- oder Dimethyldibenzylidensorbitol oder Salze von Diestern der Phosphorsäure wie Natrium-2,2'-methylenbis (4,6,-di-tert.-butylphenyl)phosphat. Der Gehalt der Propylenpolymerisat-Zusammensetzung an Nukleierungsmitteln beträgt in der Regel bis 5 Gew.-%.

Solche Additive sind in der Regel handelsüblich und werden beispielsweise in Gächter/Müller, Plastics Additives Handbook, 4th Edition, Hansa Publishers, Munich, 1993 beschrieben.

Nach einem besonders bevorzugten Verfahren werden unterschiedliche erfindungsgemäß hergestellte Propylenpolymerisate, die verschiedene Schmelze-Fließrate MFR aufweisen, so hergestellt, daß man die Polymerisation mittels des Metallocenkatalysatorsystems, beispielsweise durch Zugabe eines Molmassenreglers wie Wasserstoff, so steuert, daß man im wesentlichen immer die gleiche Schmelze-Fließrate erhält und die Unterschiede in der Schmelze-Fließrate der abgebauten Produkte durch die Zugabe unterschiedlicher Mengen an Peroxid erreicht. Dies hat bei großtechnischen kontinuierlichen Verfahren den Vorteil, daß es nicht notwendig ist, bei der Umstellung von einem Produkt auf das nächste die Bedingungen im Reaktor zu verändern und dann die Einstellung eines Gleichgewichtszustands abzuwarten. Es muß vielmehr lediglich die Menge an zugegebenem Peroxid beispielsweise im Extruder verändert werden. Dadurch gelingt es, den Wechsel zwischen zwei typgerechten, erfindungsgemäß hergestellten Produkten innerhalb einer sehr kurzen Zeitspanne und mit einer sehr geringen Menge an nicht typgerechter Übergangsware durchzuführen. Hierdurch wird das Verfahren insgesamt sehr wirtschaftlich.

Die nach dem erfindungsgemäßen Verfahren hergestellten Propylenpolymerisate zeichnen sich durch geringe Anteile an ataktischen Anteilen sowie durch geringe Rückstände, insbesondere an Halogenen, aus, sind besonders wirtschaftlich herstellbar und lassen sich gut verspinnen, wobei Fasern mit einer sehr hohen Festigkeit erhalten werden.

Ein weiterer Gegenstand der Erfindung sind aus den Polymerisaten hergestellte Fasern, Filamente und Vliese.

Die Herstellung der Fasern, Filamente und Vliese kann durch die verschiedensten üblichen Verarbeitungstechnologien erfolgen. Beispielsweise ist es möglich, Nonwoven-Vliese nach der Reicofil-Technologie der Fa. Reifenhäuser herzustellen. Endlosfilamente (CF/BCF/POY-Garne) können z.B. durch die Technologien der Fa. Barmag oder Neumag erhalten werden. Zur Herstellung von Stapelfaser (SFI) können beispielsweise Linien der Fa. Fare eingesetzt werden.

Die aus der erfindungsgemäß erhaltenen Propylenpolymerisaten hergestellten Fasern, Filamente und Vliese sind insbesondere hervorragend in der Festigkeit.

### Beispiele

Zur Charakterisierung der Proben wurden folgende Prüfungen durchgeführt:
Bestimmung des Schmelze-Fließrate (MFR):
   nach ISO-Norm 1133, bei 230°C und unter einem Gewicht von 2,16 kg
Gelpermeationschromatographie (GPC):
   Die Gelpermeationschromatographie (GPC) wurde bei 145°C in 1,2,4-Trichlorbenzol durchgeführt, wobei eine GPC-Apparatur 150C der Fa. Waters zum Einsatz kam. Die Auswertung der Daten erfolgte mit der Software Win-GPC der Fa. HS-Entwicklungsgesellschaft für wissenschaftliche Hard- und Software mbH, Ober-Hilbersheim. Die Kalibrierung der Säulen erfolgte mittels Polypropylenstandards mit Molmassen von 100 bis 10⁷ g/ mol.
   Es wurden Massenmittel (M_{w}) und Zahlenmittel (Mₙ) der Molmassen der Polymerisate bestimmt. Der Q-Wert ist das Verhältnis von Massenmittel (M_{w}) zu Zahlenmittel (Mₙ).
Bestimmung der Faserfestigkeit:
   Mit einem Meßgerät Tensorapid 3 nach ISO-Norm 2062 EN.
Bestimmung der Faserdehnung:
   Mit einem Meßgerät Tensorapid 3 nach DIN 53834.

### Beispiel 1

In einem kontinuierlich betriebenen, vertikal gerührten Gasphasenreaktor mit einem Nennvolumen von 12,5 m³ wurden 300 g/h eines Metallocen-Trägerkatalysators, der gemäß Beispiel 9.1 der WO 00/05277 hergestellt worden war, dosiert. Der Reaktor wurde bei 24 bar und 67°C betrieben. Zur Druckhaltung wurden 2,1 t Propylen/h zugefahren. Als Cokatalysator wurden 400g Triisobutylaluminium/t Propylen zugesetzt. Der Produktaustrag erfolgte durch kurzzeitige, getaktete Entspannung über ein Tauchrohr. Nach Abtrennung des mitgeführten Monomers und Spülung des erhaltenen Reaktorgrieses mit 20 Nm³/t Stickstoff wurde der Polymergries in einen Vorlagebehälter überführt. Die Bestimmung der Schmelze-Fließrate ergab einen Wert von 5,5 g/10 min. Aus dem Vorlagebehälter wurde der Gries über eine kontinuierliche Wiegevorrichtung in den Einzug eines Extruders (ZSK 130 der Fa. Werner & Pfleiderer) dosiert. Der Abbau der Propylenpolymerisate erfolgte durch Eindüsen von 600 g einer 32,5-prozentigen Lösung eines organischen Peroxids (2,5-Dimethyl- 2,5-di-tert.-butylperoxyhexan, Trigonox 101, Fa. Akzo-Nobel) in Heptan pro Tonne Polypropylen in das dritte Extrudergehäuse. Das Granulat wurde über eine Unterwassergranulierung UG 200 der Firma Werner & Pfleiderer abgeschlagen und über einen Zentrifugaltrockner (Fa. Gala) vom Granulierwasser getrennt. Das erhaltene Granulat wies eine mittlere Schmelze-Fließrate von 12 g/10 min und einen Q-Wert von 1,7 auf.

Aus dem Granulat wurde mit einer Spinn-/Streck-/Spulanlage für Oxfordgarn der Firma Rieter, Winterthur, Schweiz Fasern gesponnen. Die Anlagenkonfiguration enthielt eine nicht beheizte Einlaufrolle .und ein 3. Galettenpaar Duo 3. Der Extruder war mit einer 3 Zonen-Schnecke (D = 50 mm; L = 24 D) mit RTM Mischer ausgerüstet. Das Kompressionsverhältnis betrug 3,1. Der Innendurchmesser der Schmelzeleitung war konisch zulaufend und wies 3 statische Mischelemente der Fa. Sulzer auf. Es kam eine Spinnpumpe mit 2 x 3,6 cm³/U der Fa. Mahr zum Einsatz. Die Düsenplatte hatte 80 mm Durchmesser und wies 12 Bohrungen mit d = 0,45 und l = 0,9 mm auf. Als Filterpaket diente ein 4-fach Sieb (d = 68 mm; 21000/9000/625/64 M/cm²) das zwischen den Sieben 260 g Stahlpulver mit 350 - 500 Mikrometer Körnung enthielt. Als Spin Finish wurde Stantex S 6024 der Fa. Cognis verwendet, wobei 0,8 - 1 Gew.-%, bezogen auf das Fasergewicht, als 10 gew.-%ige Emulsion aufgetragen wurden.

Die Fahrparameter waren:

| | |
|---|---|
| Temperatur Zone 1: | 230°C |
| Temperatur Zone 2: | 235°C |
| Temperatur Zone 3: | 235°C |
| Temperatur Zone 4: | 240°C |
| Diphyl-Temperatur: | 240°C |
| Extruderdruck: | 100 bar |
| Spinntiter: | 80f12 dtex |
| Blasluft-Temperatur: | 20°C |
| Luftfeuchte: | 75% |
| Blasluftgeschwindigkeit: | 0,4 m/s |
| Abstand Öler/Düsen: | 140 cm |
| Abstand Öler/Sieb: | 26 cm |
| Mono 1 Geschwindigkeit: | 3020 m/min |
| Monol1, Anzahl der Umschlingung | 3 |
| Duo 3 Geschwindigkeit: | 3030 m/min |
| Duo 3, Anzahl der Umschlingung | 5 |
| Wickler Geschwindigkeit: | 3000 m/min |
| Changierung: | Nutwalzen |
| Fadenspannungabbau: | 1000 |
| V+Packung: | 120 m/min |
| V+Spuler: | 100 m/min |
| V+Hülse: | 1% |
| Kreuzungswinkel 1-4: | 14% |
| Fadenspannung vor dem Wickler: | 5,2 cN |
| Fadenspannung vor Mono 1: | 9,0 cN |

Die an den erhaltenen Fasern gemessenen Werte sind in der nachstehenden Tabelle 1 wiedergegeben.

### Vergleichsbeispiel A

Es wurde verfahren wie in Beispiel 1, jedoch mit dem Unterschied, daß in den Reaktor zusätzlich 4 g Wasserstoff/t Propylen dosiert wurden. Der Reaktorgries hatte eine Schmelze-Fließrate von 12 g/10 min. Es erfolgt keine Peroxiddosierung in den Extruder. Das erhaltene Granulat wies eine mittlere Schmelze-Fließrate von 12 g/10 min und einen Q-Wert von 1,9 auf.

Die an den erhaltenen Fasern gemessenen Werte sind in der nachstehenden Tabelle 1 wiedergegeben.

### Beispiel 2

Es wurde verfahren wie in Beispiel 1, jedoch mit dem Unterschied, daß in das 3. Extrudergehäuse 1,2 kg einer 32,5-prozentigen Lösung eines organischen Peroxids (Trigonox 101, Fa. Akzo-Nobel) in Heptan pro Tonne Polypropylen zudosiert wurden. Das erhaltene Granulat wies eine mittlere Schmelze-Fließrate von 18 g/10 min und einen Q-Wert von 1,6 auf.

Die an den erhaltenen Fasern gemessenen Werte sind in der nachstehenden Tabelle 1 wiedergegeben.

### Vergleichsbeispiel B

Es wurde verfahren wie in Beispiel 1, jedoch mit dem Unterschied, daß in den Reaktor zusätzlich 12 g Wasserstoff/t Propylen dosiert wurden. Der Reaktorgries hatte eine Schmelze-Fließrate von 18 g/10 min. Es erfolgt keine Peroxiddosierung in den Extruder. Das erhaltene Granulat wies eine mittlere Schmelze-Fließrate von 18 g/10 min und einen Q-Wert von 1,8 auf.

Die an den erhaltenen Fasern gemessenen Werte sind in der nachstehenden Tabelle 1 wiedergegeben.

### Beispiel 3

Es wurde verfahren wie in Beispiel 1, jedoch mit dem Unterschied, daß in das 3. Extrudergehäuse 1,9 kg einer 32,5 prozentigen Lösung eines organischen Peroxids (Trigonox 101, Fa. Akzo-Nobel) in Heptan pro Tonne Polypropylen zudosiert wurden. Das erhaltene Granulat wies eine mittlere Schmelze-Fließrate von 30 g/10 min und einen Q-Wert von 1,7 auf.

Die an den erhaltenen Fasern gemessenen Werte sind in der nachstehenden Tabelle 1 wiedergegeben.

### Vergleichsbeispiel C

Es wurde verfahren wie in Beispiel 1, jedoch mit dem Unterschied, daß in den Reaktor zusätzlich 25 g Wasserstoff/t Propylen dosiert wurden. Der Reaktorgries hatte eine Schmelze-Fließrate von 30 g/10 min. Es erfolgt keine Peroxiddosierung in den Extruder. Das erhaltene Granulat wies eine mittlere Schmelze-Fließrate von 30 g/10 min und einen Q-Wert von 1,6 auf.

Die an den erhaltenen Fasern gemessenen Werte sind in der nachstehenden Tabelle 1 wiedergegeben.

**Tabelle 1**

| | MFR [g/10 min] | Q | Festigkeit [cN/dtex] | Dehnung [%] |
|---|---|---|---|---|
| Beispiel 1 | 12 | 1,7 | 3,7 | 156 |
| Vergleichsbeispiel A | 12 | 1,9 | 3,2 | 182 |
| Beispiel 2 | 18 | 1,6 | 3,6 | 114 |
| Vergleichsbeispiel B | 18 | 1,8 | 3,1 | 186 |
| Beispiel 3 | 30 | 1,7 | 3,2 | 120 |
| Vergleichsbeispiel C | 30 | 1,6 | 2,6 | 182 |

Die in Tabelle 1 wiedergegebenen Daten zeigen, daß die Polymerisate der Beispiele 1 - 3 gegenüber den entsprechenden Vergleichsbeispielen A - C die gleiche Fließfähigkeit aufweisen und sich die Breite der Molmassenverteilung innerhalb der Meßtoleranz nicht unterscheidet. Trotzdem erhält man mit den erfindungsgemäßen Polymerisaten um ca. 15-16 % erhöhte Filamentfestigkeiten. Da der Fehler bei der Bestimmung der Festigkeit nur ± 1% beträgt, handelt es sich hierbei um eine signifikante Erhöhung der Festigkeit.

## Patentansprüche

1. Verfahren zur Herstellung von für das Faserspinnen geeigneten Propylenpolymerisaten aus Propylen, Ethylen und/oder C₄-C₁₈-Alk-1-enen, wobei mindestens 90 mol-% der in den Propylenpolymerisaten enthaltenen Monomereinheiten durch Polymerisation von Propylen entstanden sind, bei dem die entsprechenden Monomere mittels eines Metallocenkatalysatorsystems zu Propylenpolymerisaten mit einem Verhältnis Q = M_{W}/M_{N} von kleiner oder gleich 2,2 polymerisiert werden, und Q ein Maß für die Breite der Molmassenverteilung ist, M_{W} das Massenmittel der Molmasse und M_{N} das Zahlenmittel der Molmasse bedeutet und M_{W} und M_{N} durch Gelpermeationschromatographie (GPC) bei 145°C in 1,2,4-Trichlorbenzol bestimmt werden, **dadurch gekennzeichnet, daß** man die Propylenpolymerisate anschließend peroxidisch oder thermisch abbaut.

2. Verfahren zur Herstellung von für das Faserspinnen geeigneten Propylenpolymerisaten nach Anspruch 1, **dadurch gekennzeichnet, daß** die Propylenpolymerisate Homopolymerisate des Propylens sind.

3. Verfahren zur Herstellung von für das Faserspinnen geeigneten Propylenpolymerisaten nach Anspruch 1 oder 2, **dadurch gekennzeichnet, daß** die Propylenpolymerisaten peroxidisch bei Extrudertemperaturen im Bereich von 180 bis 280°C und Drücken von 0 bis 200 bar abgebaut werden.

4. Verfahren zur Herstellung von für das Faserspinnen geeigneten Propylenpolymerisaten nach den Ansprüchen 1-3, **dadurch gekennzeichnet, daß** man die Polymerisation der Monomere mittels des Metallocenkatalysatorsystems in der Gasphase durchführt.

5. Propylenpolymerisate, erhältlich durch ein Verfahren nach den Ansprüchen 1 - 4.

6. Verfahren zur Herstellung von unterschiedlichen Propylenpolymerisaten nach Anspruch 5, die verschiedene Schmelze-Fließraten MFR aufweisen, **dadurch gekennzeichnet, daß** man die Polymerisation der Monomere mittels des Metallocenkatalysatorsystems so steuert, daß man bei der Polymerisation im wesentlichen immer die gleiche Schmelze-Fließrate erhält und die Unterschiede in der Schmelze-Fließrate der abgebauten Produkte durch die Zugabe unterschiedlicher Mengen an Peroxid erreicht.

7. Verwendung der Propylenpolymerisate nach Anspruch 5 zur Herstellung von Fasern.

8. Fasern, Folien und Formkörper aus den Propylenpolymerisaten nach Anspruch 5.

## Claims

1. A process for producing from propylene, ethylene and/or C₄-C₁₈-alk-1-enes a fiber grade propylene polymer in which not less than 90 mol% of the units derived from monomers are derived from propylene comprising polymerizing the monomers by means of a metallocene catalyst system to a propylene polymer which has a polydispersity index PDI of not more than 2.2, where PDI is M_{W}/M_{N}, M_{W} is the weight average molar mass and M_{N} is the number average molar mass and both are determined by gel permeation chromatography (GPC) at 145°C in 1,2,4-trichlorobenzene, and subsequently degrading said propylene polymer peroxidically or thermally.

2. A process as claimed in claim 1, wherein said propylene polymer is a homopolymer of propylene.

3. A process as claimed in claim 1 or 2, wherein said propylene polymer is degraded peroxidically at extruder temperatures in the range from 180 to 280°C and pressures from 0 to 200 bar.

4. A process as claimed in any of claims 1 - 3, wherein the metallocene-catalyzed polymerization of the monomers is carried out in the gas phase.

5. A propylene polymer obtainable by a process as claimed in any of claims 1 - 4.

6. A process for producing different propylene polymers as set forth in claim 5 which have different MFR melt flow rates, which comprises controlling the metallocene-catalyzed polymerization of the monomers in such a way that the polymerization provides substantially always the same melt flow rate and the differences in the melt flow rates of the degraded products are obtained by adding different amounts of peroxide.

7. The use of a propylene polymer as claimed in claim 5 for producing fiber.

8. Fiber, film or a shaped article comprising the propylene polymer of claim 5.

## Revendications

1. Procédé de préparation de polymères de propylène appropriés pour le filage de fibres à partir de propylène, d'éthylène et/ou d'alc-1-ènes en C₄ à C₁₈, où au moins 90% en moles des motifs monomères contenus dans les polymères de propylène ont été formés au moyen d'une polymérisation de propylène, dans lequel on polymérise les monomères correspondants en polymères de propylène au moyen d'un système de catalyseur de métallocène avec un rapport Q = Mₘ/Mₙ inférieur ou égal à 2,2, et Q est une mesure de la largeur de la distribution des masses moléculaires, Mₘ représentant la masse moléculaire moyenne en poids et Mₙ représentant la masse moléculaire moyenne en nombre, et Mₘ et Mₙ étant déterminées au moyen d'une chromatographie par perméation de gel (CPG) à 145°C dans du 1,2,4-trichlorobenzène, **caractérisé en ce que** l'on décompose ensuite les polymères de propylène par voie peroxydique ou thermique.

2. Procédé de préparation de polymères de propylène appropriés pour le filage de fibres selon la revendication 1, **caractérisé en ce que** les polymères de propylène sont des homopolymères du propylène.

3. Procédé de préparation de polymères de propylène appropriés pour le filage de fibres selon la revendication 1 ou 2, **caractérisé en ce que** l'on décompose les polymères de propylène par voie peroxydique à des températures d'extrudeuse allant de 180°C à 280°C et sous des pressions allant de 0 bar à 200 bars.

4. Procédé de préparation de polymères de propylène appropriés pour le filage de fibres selon les revendications 1 à 3, **caractérisé en ce que** l'on réalise la polymérisation des monomères en phase gazeuse au moyen du système de catalyseur de métallocène.

5. Polymères de propylène, pouvant être obtenus au moyen d'un procédé selon les revendications 1 à 4.

6. Procédé de préparation de différents polymères de propylène selon la revendication 5, qui présentent différents indices de fluidité à chaud MFR, **caractérisé en ce que** l'on règle la polymérisation des monomères au moyen du système de catalyseur de métallocène de manière à obtenir, lors de la polymérisation, presque toujours le même indice de fluidité à chaud et à atteindre les différences d'indice de fluidité à chaud des produits décomposés en ajoutant différentes quantités de peroxyde.

7. Utilisation des polymères de propylène selon la revendication 5 pour la production de fibres.

8. Fibres, films et corps moulés à base de polymères de propylène selon la revendication 5.
